# EUROPÄISCHE PATENTSCHRIFT

(11) **EP 3 148 879 B1**
(45) Veröffentlichungstag und Bekanntmachung des Hinweises auf die Patenterteilung: **04.10.2017**
(21) Anmeldenummer: 15731239.8
(22) Anmeldetag: 26.05.2015
(51) Int. Cl.: B64D 11/00

(54) **ÜBERKOPF-GEPÄCKFACH FÜR FLUGZEUGE UND FLUGZEUG**
OVERHEAD LUGGAGE COMPARTMENT FOR AIRPLANES, AND AIRPLANE
COMPARTIMENT À BAGAGES SUPÉRIEUR POUR AVIONS, ET AVION

(30) Priorität: 26.05.2014 AT 503732014
(43) Veröffentlichungstag der Anmeldung: 05.04.2017
(73) Patentinhaber: FACC AG, 4910 Ried im Innkreis (AT)
(72) Erfinder: KAMMERER, Bernhard, 4755 Zell am Pram (AT); SCHÖRKHUBER, Jakob, 4682 Geboltskirchen (AT)
(74) Vertreter: Sonn & Partner Patentanwälte
(86) Internationale Anmeldenummer: PCT/AT2015/050131
(87) Internationale Veröffentlichungsnummer: WO 2015/179889

(56) Entgegenhaltungen:
- EP-A1- 1 436 194
- DE-A1- 4 130 644
- DE-A1- 4 335 151
- DE-A1-102008 049 639
- GB-A- 2 263 727

## Beschreibung

Die Erfindung betrifft ein Überkopf-Gepäckfach für Flugzeuge gemäß dem Oberbegriff von Anspruch 1.

Weiters betrifft die Erfindung ein Flugzeug mit einem solchen Überkopf-Gepäckfach.

Derartige Überkopf-Gepäckfächer sind im Stand der Technik bekannt und wurden beispielsweise in der noch nicht zur Veröffentlichung gelangten österreichischen Patentanmeldung A 50078/2013 beschrieben. Diese Gepäckfächer wurden für größere Passagierflugzeuge, welche auch eine größere Raumhöhe aufweisen, entwickelt. Zum Zweck des Beladens und Entladens wird das Gepäckfach nach unten in die geöffnete Position verschwenkt. Derartige Verschwenkmechanismen verfügen normalerweise über zumindest ein Federelement, welches die Bewegung des Behälters entgegen der Schwerkraft in seine geschlossene Stellung unterstützt und somit dem Passagier ein Schließen des beladenen Behälters erleichtert.

Die Gepäckfächer weisen zudem eine Einrichtung zum Halten des Behälters in seiner geöffneten Stellung auf, welche gemäß der EP 1 436 194 durch eine federnd gelagerte Kugel gebildet sein kann, die in geöffneter Stellung des Gepäckfachs in eine entsprechende Rastvertiefung eingreift. Dadurch kann der Behälter zweckmäßigerweise zum Be- und Entladen in seiner geöffneten Position gehalten werden und dadurch die Handhabung erleichtert werden. Dabei muss die Halteeinrichtung entsprechend positioniert sein und die Federkraft, welche die Kugel in die Rastvertiefung drückt, mindestens so groß sein, dass sie nicht durch die Kraft des Federelements überwunden wird.

Die bekannten Gepäckfächer haben jedoch den Nachteil, dass die Federkraft der Halteeinrichtung unabhängig vom Beladungszustand überwunden werden muss. Nachteiligerweise ist daher zur Einleitung des Schließvorgangs eine hohe Bedienkraft erforderlich, wenn das verschwenkbare Gepäckfach mit Gepäckstücken beladen ist.

Darüber hinaus wurden im Stand der Technik bereits verschiedenste Einrichtungen zur Erfassung des Beladungszustands des Gepäckfachs vorgeschlagen, jedoch lediglich mit dem Ziel, die Unterstützung der Schließbewegung in Abhängigkeit vom Beladungszustand einzustellen.

Die DE 41 30 644 A1 zeigt beispielsweise eine Überkopfgepäckablage, deren Bedienung nur eine geringe und von der Zuladung und Stellung des beweglichen Behälters weitgehend unabhängige Betätigungskraft erfordert. Zu diesem Zweck ist die zur Unterstützung des Schließvorganges vorgesehene Gasfeder verschwenkbar angeordnet, so dass der Anlenkpunkt an den Oberhebel und somit das auf den Oberhebel wirkende Drehmoment, welches den Schließvorgang des Behälters unterstützt, veränderbar ist. Das Gewicht des beweglichen Behälters der Überkopfgepäckablage wird über einen Wägezapfen erfasst, der auf einen mit dem Federelement verbundenen Wägehebel einwirkt. Je nach Gewicht der Beladung des Behälters wird die Gasfeder mehr oder weniger verschwenkt und dadurch die Gewichtskraft des Behälters kompensiert.

Die DE 43 35 151 A1 zeigt ebenfalls eine Überkopfgepäckablage mit einem absenkbaren Behälter, bei der zur Unterstützung des Schließvorgangs ein weiteres Federelement in Abhängigkeit der Beladung des Behälters zuschaltbar ist. Ohne oder bei geringer Beladung des Behälters wird ein mit dem zusätzlichen Federelement verbundener Unterstützungshebel blockiert, so dass das zusätzliche Federelement keine zusätzliche Kraft auf den Behälter ausübt. Überschreitet die Beladung des Behälters einen gewissen Grenzwert, der durch eine gewichtsbedingte Auslenkung des beweglichen Behälters erfasst wird, dann kann die Blockierung des Unterstützungshebels durch einen aktiven Druck von unten auf eine Auslöseplatte am beweglichen Behälterteil freigegeben werden und das zusätzliche Federelement wirkt zur Unterstützung des Schließvorgangs. Dabei ist zwischen der Auslöseplatte und dem Unterstüzungshebel ein Bowdenzug zur Übertragung des Drucks auf die Auslöseplatte auf dem Blockierhaken angeordnet. Für eine Zuschaltung der Unterstützungsfeder ist daher ein aktives Zutun des Passagiers erforderlich.

Die AT 410 536 B bezieht sich auf eine Aufhängevorrichtung für absenkbare Gepäckablagebehälter. Der Behälter ist über die Aufhängevorrichtung mit einem feststehenden Strukturbauteil verbunden, wobei der Behälter aus einer Schließstellung in eine Offenstellung absenkbar ist. Bei dieser Ausführung ist am Behälter eine Einrichtung zur Erfassung des Gewichts des Behälters angeordnet, damit in Abhängigkeit des erfassten Gewichts des Behälters ein zusätzliches Federelement zugeschaltet werden kann. Das zusätzliche Federelement wird durch eine Rückhalteeinrichtung in Form eines bewegbaren Hakens fixiert, bis der Behälter mit Gepäckstücken beladen wird. Dadurch sinkt der Behälter gegen die Federkraft einer Messfeder nach unten, wobei über einen Bowdenzug der Haken freigegeben wird, mit welchem eine Hülse des Federelements zurückgehalten wird. Dadurch kann das zusätzliche Federelement zusätzlich zu einer Schraubenfeder die Bewegung des Behälters in die geschlossene Stellung auch bei voller Beladung unterstützen.

Die AT 413 812 B bezieht sich ebenfalls auf eine Aufhängevorrichtung für absenkbare Gepäckablagebehälter. Hierbei ist an der Seitenwand des absenkbaren Behälters eine Schaltkulisse angeordnet, welche in geöffneter Stellung des Gepäckablagebehälters mit einem Schalthebel eines Federelements zusammenwirkt, um eine Umschaltung des Federelements in Abhängigkeit des Gewichts des Behälters zu bewirken. Je nach gewichtsbedingter Lageveränderung des Behälters wird die Schaltkulisse bewegt. Im Fall eines mittelmäßig beladenen Behälters wird dieser gegen die Kraft einer Messfeder nach unten bewegt. Dadurch führt auch die Schaltkulisse eine entsprechende Bewegung aus, sodass der Schalthebel auf der tiefer liegenden Stufe der Schaltkulisse zu liegen kommt und dadurch eine Drehbewegung einer mit dem Schalthebel verbundenen Scheibe bewirkt. Dadurch wird das Federelement freigegeben, welches somit beim Schließvorgang seine Kraft ausüben kann. Bei dieser mittleren Beladung des Behälters wirkt somit nur das größere Federelement. Im vollbeladenen Zustand des Behälters kommt der Schalthebel auf der untersten Stufe der Schaltkulisse zu liegen, sodass die Scheibe eine weitere Drehbewegung vollzieht. Dadurch wird sowohl eine Hülse eines weiteren Federelements als auch das Federelement freigegeben, sodass beide Federelemente ihre Kraft ausüben können.

Weitere Gepäckfächer mit Einrichtungen zur gewichtsabhängigen Unterstützung des Schließvorgangs sind in den DE 196 17 657 A1, EP 1 260 434 A1 und EP 1 436 194 B1 beschrieben.

Zudem sind weitere Überkopf-Gepäckfächer in den DE 10 2006 045 189 A1, DE 10 2010 034 025 A1, US 2008/112754 A1 und DE 10 2011 110 406 A1 geoffenbart.

Demgegenüber besteht die Aufgabe der vorliegenden Erfindung darin, ein Überkopf-Gepäckfach der eingangs angeführten Art zu schaffen, mit welchem der Beladungszustand des beweglichen Gepäckfachelements zur Einleitung des Schließvorgangs in der geöffneten Position auf konstruktiv einfache, platzsparende Weise berücksichtigt werden kann.

Diese Aufgabe wird durch ein Überkopf-Gepäckfach, wie in Anspruch 1 angegeben, gelöst. Bevorzugte Ausführungsformen sind in den abhängigen Ansprüchen angegeben.

Erfindungsgemäß weist daher die Einrichtung zum Halten des beweglichen Gepäckfachelements in der geöffneten Position ein mit dem Gelenk zwischen dem feststehenden Gepäckfachelement und dem beweglichen Gepäckfachelement verbundenes Kraftübertragungselement auf, wobei das Gelenk in der geöffneten Position des beweglichen Gepäckfachelements in Abhängigkeit vom Beladungszustand des beweglichen Gepäckfachelements verschieblich ist, wobei das Kraftübertragungselement in der geöffneten Position des beweglichen Gepäckfachelements durch die Verschiebung des Gelenks im unbeladenen Zustand in einer aktiven Stellung und im beladenen Zustand in einer inaktiven Stellung angeordnet ist, wobei in der aktiven Stellung des Kraftübertragungselements ein der Verschwenkung des beweglichen Gepäckfachelements aus der geöffneten Position in Richtung der geschlossenen Position entgegenwirkendes Haltemoment ausgeübt wird.

Demnach ist die erfindungsgemäße Einrichtung zum Halten des beweglichen Gepäckfachelements in der geöffneten Position dazu eingerichtet, den Beladungszustand, d.h. das Vorhandensein eines Gepäckstückes in dem beweglichen Gepäckfachelement, zu erfassen, um die Bedienkraft zur Einleitung der Schließbewegung einzustellen. Im unbeladenen Zustand ist die Aufbringung eines Haltemoments erforderlich, um das in die aktive Stellung verschobene Kraftübertragungselement freizugeben. Demgegenüber ist das Kraftübertragungselement im beladenen Zustand inaktiv, wodurch das Schließen des Gepäckfaches erleichtert wird. Zu diesem Zweck sieht die Erfindung eine besonders einfache, zuverlässige Lösung vor, bei welcher die gewichtsabhängige Verschiebung des Gelenks in der geöffneten Position zur Verlagerung des Kraftübertragungselements zwischen der aktiven Stellung und der inaktiven Stellung herangezogen wird. Bei einer bevorzugten Ausführung ist das Gelenk an überlappenden Abschnitten von Seitenwänden des beweglichen bzw. des feststehenden Gepäckfachelements vorgesehen. Im unbeladenen Zustand liegt das Kraftübertragungselement in der geöffneten Position des beweglichen Gepäckfachelementes in einer oberen, aktiven Stellung vor, so dass zum Schließen des Gepäckfaches das Haltemoment überwunden werden muss. Dadurch kann eine unbeabsichtigte Einleitung des Schließvorgangs zuverlässig verhindert werden. Durch Beladung des beweglichen Gepäckfachelements wird das Gelenk nach unten verlagert, so dass das damit verbundene Kraftübertragungselement in der geöffneten Position des beweglichen Gepäckfachelements in der unteren, inaktiven Stellung angeordnet wird. Das Kraftübertragungselement ist dazu eingerichtet, dass in der inaktiven Stellung ein geringeres Haltemoment als in der aktiven Stellung, bevorzugt kein Haltemoment, auf das bewegliche Gepäckfachelement ausgeübt wird. Vorteilhafterweise muss daher im beladenen Zustand lediglich das Gewicht des Gepäckfachs mit dem Gepäckstück überwunden werden, wenn das Gepäckfach aus der geöffneten Position in Richtung der geschlossenen Position bewegt werden soll. Dadurch kann die Bedienung des Gepäckfaches besonders komfortabel gestaltet werden. Weiters ist von Vorteil, dass die Anordnung des Kraftübertragungselements an dem Gelenk durch geringfügige Adaptierung herkömmlicher Gepäckfächer möglich ist. Demnach kann die erfindungsgemäße Einrichtung zur Feststellung des Beladungszustands mit geringem baulichen Aufwand realisiert werden. Darüber hinaus ist es vorteilhaft, dass die erfindungsgemäße Konstruktion besonders platzsparend ist. Dafür ist es günstig, wenn das Kraftübertragungselement unmittelbar mit dem Gelenk verbunden ist. Schließlich ist es günstig, dass bereits geringfügige Verschiebungen des Gelenks in Abhängigkeit vom Beladungszustand genügen, um die Einrichtung zum Halten des beweglichen Gepäckfachelements in der geöffneten Position zu aktivieren bzw. zu deaktivieren. Um das bewegliche Gepäckfachelement zuverlässig in der geöffneten Position zu arretieren, ist es von Vorteil, dass das feststehende Gepäckfachelement ein Kontaktelement aufweist, welches in der aktiven Stellung mit dem Kraftübertragungselement in Eingriff steht, wobei in der inaktiven Stellung des Kraftübertragungselements der Eingriff zwischen dem Kraftübertragungselement und dem Kontaktelement gelöst ist. Demnach wirkt das Kraftübertragungselement, welches mit dem Gelenk zwischen dem beweglichen und dem feststehenden Gepäckfachelement gekoppelt ist, mit dem Kontaktelement zusammen, welches am feststehenden Gepäckfachelement vorgesehen ist. In der aktiven Stellung sind das Kraftübertragungselement und das Kontaktelement kraftschlüssig und/oder formschlüssig miteinander verbunden. Im unbeladenen Zustand des Gepäckfaches ist es daher zum Schließen des Gepäckfaches erforderlich, den Kraft- bzw. Formschluss zwischen dem Kraftübertragungselement und dem Kontaktelement durch Aufbringung des Haltemoments zu überwinden. Demgegenüber wird das Kraftübertragungselement im beladenen Zustand des Gepäckfaches in der inaktiven Stellung angeordnet, in welcher ein geringeres bzw. kein Haltemoment erzeugt wird.

Um das Gewicht des Gepäckstücks auf konstruktiv einfache Weise zur Überführung des Kraftübertragungselements zwischen der aktiven und der inaktiven Stellung zu nutzen, ist es günstig, wenn das Kraftübertragungselement in Abhängigkeit vom Beladungszustand, bezogen auf einen an einem Flugzeugrumpf befestigten Zustand des Überkopf-Gepäckfaches, im Wesentlichen in vertikaler Richtung zwischen der aktiven Stellung und der inaktiven Stellung verlagerbar ist. Demnach wird durch das Gewicht des Gepäckstücks eine Absenkung des Gelenks zwischen dem beweglichen und dem feststehenden Gepäckfachelement bewirkt, wobei die Absenkung des Gelenks in eine vertikale Verschiebung des Kraftübertragungselements zwischen der aktiven Stellung und der inaktiven Stellung umgewandelt wird. In der aktiven Stellung des Kraftübertragungselements wird ein Haltemoment erzeugt, welches der Verschwenkung des beweglichen Gepäckfachelements in Richtung der geschlossenen Position entgegenwirkt.

Um das der Verschwenkung des Gepäckfaches aus der geöffneten Position in die geschlossene Position entgegenwirkende Haltemoment für den unbeladenen Zustand des Gepäckfaches vorzusehen, ist bevorzugt zumindest ein Federelement zur Vorspannung des Kraftübertragungselements in Richtung der aktiven Stellung vorgesehen. In Abwesenheit eines Gepäckstückes ist daher die Halteeinrichtung in der geöffneten Position des beweglichen Gepäckfachelements aktiv. Durch die Anordnung eines Gepäckstücks wird andererseits das Gelenk zusammen mit dem Kraftübertragungselement abgesenkt, so dass das Kraftübertragungselement in der inaktiven Stellung angeordnet wird. Beim Schließen des Gepäckfaches im beladenen Zustand ist daher ein geringeres oder gar kein Haltemoment der Halteeinrichtung zu überwinden.

Zur Erhöhung des Bedienkomforts ist es vorteilhaft, wenn zwischen dem beweglichen Gepäckfachelement und dem feststehenden Gepäckfachelement eine Hebefeder vorgesehen ist, mit welcher die Verschwenkung des beweglichen Gepäckfachelements aus der geöffneten Position in die geschlossene Position unterstützt wird. Demnach wirkt die Hebefeder in Richtung der geschlossenen Position des Gepäckfaches. Zudem kann ein Dämpfungselement vorgesehen sein, welches die Bewegung des beweglichen Gepäckfachelements nach unten dämpft, so dass das bewegliche Gepäckfachelement beim Öffnen nicht abrupt nach unten fällt. Derartige Hebefedern bzw. Dämpfungselemente wurden bei Gepäckfächern mit verschwenkbaren Gepäckfachelementen bereits eingesetzt. Vorteilhaft ist jedoch ein Einsatz in Verbindung mit dem erfindungsgemäßen Kraftübertragungselement, welches in der geöffneten Position des beweglichen Gepäckfachelements je nach Beladungszustand in einer aktiven oder in einer inaktiven Stellung angeordnet ist. Durch die Hebefeder kann die Verschwenkbewegung des beweglichen Gepäckfachelements unterstützt werden, nachdem der Schließvorgang, abhängig vom Beladungszustand durch Überwindung des Haltemoments, eingeleitet wurde. Als Hebefeder kann beispielsweise eine Gasfeder zum Einsatz kommen, welche auch die Funktion eines Dämpfungselements übernimmt. Bevorzugt sind pro Gepäckfach zwei Hebefedern vorgesehen, welche an gegenüberliegenden Seitenwänden jeweils des beweglichen und des feststehenden Gepäckfachelements angreifen.

Um die Schwenkbewegung des beweglichen Gepäckfachelements zur Anordnung des Kraftübertragungselements in der aktiven Stellung zu nutzen, ist es vorteilhaft, wenn das Kraftübertragungselement drehfest mit dem Gelenk zwischen dem beweglichen Gepäckfachelement und dem feststehenden Gepäckfachelement verbunden ist, so dass das Kraftübertragungselement durch Verschwenkung des beweglichen Gepäckfachelements verschwenkbar ist. Die Aufhängung des beweglichen Gepäckfachelements kann vorteilhafterweise besonders einfach gestaltet werden, wenn das Kraftübertragungselement direkt mit dem Gelenk verbunden ist. Demnach wird das Kraftübertragungselement gemeinsam mit dem Gelenk verschwenkt. Bevorzugt wird das Kraftübertragungselement im unbeladenen Zustand des Gepäckfaches gerade dann in der aktiven Stellung angeordnet, wenn das bewegliche Gepäckfachelement die geöffnete Position erreicht. Bei dieser Ausführung ist daher die Überführung des Kraftübertragungselements in die aktive Stellung mit dem Erreichen der geöffneten Position des beweglichen Gepäckfachelements gekoppelt.

Gemäß einer bevorzugten Ausführung weisen das Kraftübertragungselement und das Kontaktelement korrespondierende Rastelemente auf, wobei die Rastelemente in der geöffneten Position des beweglichen Gepäckfachelements je nach Beladungszustand in einer verrasteten Stellung oder in einer Freigabestellung angeordnet sind. Im unbeladenen Zustand werden die korrespondierenden Rastelemente miteinander verrastet, wenn das bewegliche Gepäckfachelement die geöffnete Position erreicht. Durch Überwindung des Haltemoments wird die Rastverbindung beim Schließen des Gepäckfaches gelöst. Andererseits bleiben die Rastelemente im beladenen Zustand des Gepäckfaches inaktiv. Diese Ausführung hat den Vorteil, dass das Kraftübertragungselement nur in der geöffneten Position des beweglichen Gepäckfachelements in der aktiven Stellung angeordnet sein kann. Demnach ist bei dieser Ausführung nur in der geöffneten Position ein der Verschwenkung des beweglichen Gepäckfachelements entgegenwirkendes Haltemoment vorgesehen, welches vom Benutzer zur Einleitung des Schließvorgangs aufgewendet werden muss. Sobald das Kraftübertragungselement am Anfang des Schließvorgangs in die Freigabestellung verschoben wurde, kann die weitere Verschwenkung des beweglichen Gepäckfachelements ohne Überwindung eines von der Halteeinrichtung erzeugten Drehmoments bewerkstelligt werden.

Um das der Einleitung des Schließvorgangs entgegenwirkende Haltemoment zu erzeugen, ist es günstig, wenn das Rastelement des Kontaktelements mit einer Haltefeder verbunden ist, so dass das Rastelement des Kontaktelements gegen die Kraft der Haltefeder in Richtung der Freigabestellung verschieblich ist. Das der Verschwenkung entgegenwirkende Haltemoment ergibt sich daher aus der Kraftwirkung der Haltefeder und dem Hebelarm, welcher zwischen dem Rastelement des Kontaktelements und einem vom Benutzer ergreifbaren Griffelement gebildet ist.

Hinsichtlich einer platzsparenden, konstruktiv einfachen Ausführung ist es von Vorteil, wenn das Rastelement des Kraftübertragungselements als Rastscheibe ausgebildet ist, welche einen Rastvorsprung zur Verrastung mit dem Rastelement des Kontaktelements aufweist. Die Rastscheibe des Kraftübertragungselements ist bevorzugt drehfest mit dem Gelenk zwischen dem beweglichen und dem feststehenden Gepäckfachelement verbunden. Demnach ist die Rastscheibe durch Verschwenkung des beweglichen Gepäckfachelements verdrehbar, wobei der Rastvorsprung der Rastscheibe im unbeladenen Zustand mit dem entsprechenden Rastelement an dem feststehenden Gepäckfachelement verrastet wird, sobald das bewegliche Gepäckfachelement die geöffnete Position erreicht. Im beladenen Zustand des Gepäckfaches ist das Gelenk samt dem Kraftübertragungselement in einer abgesenkten inaktiven Stellung angeordnet, so dass der Rastvorsprung des Kraftübertragungselements nicht mit dem Rastelement an dem feststehenden Gepäckfachelement in Kontakt kommt.

Besonders zuverlässig ist eine Ausführung, bei welcher das Rastelement des Kontaktelements durch einen Federriegel gebildet ist, welcher durch das Rastelement des Kraftübertragungselements zwischen der verrasteten Stellung und der Freigabestellung verschieblich ist. Der Federriegel ist bevorzugt im Wesentlichen in radialer Richtung, bezogen auf das Gelenk zwischen dem feststehenden und dem beweglichen Gepäckfachelement, verschieblich gelagert. Wenn das Rastelement des Kraftübertragungselements auf das freie Ende des Federriegels trifft, wird der Federriegel gegen Federkraft in die Freigabestellung verschoben. Zur Entriegelung der Rastelemente muss vom Benutzer das Haltemoment überwunden werden.

Gemäß einer alternativen bevorzugten Ausführung ist das Rastelement des Kontaktelements durch ein federbelastetes Kugelelement gebildet, welches in der geöffneten Position des beweglichen Gepäckfachelements im unbeladenen Zustand innerhalb einer entsprechenden Rastausnehmung des Rastelements des Kraftübertragungselements und im beladenen Zustand außerhalb der Rastausnehmung des Rastelements des Kraftübertragungselements angeordnet ist. Bei dieser Ausführung weist das Kraftübertragungselement bevorzugt ein verschwenkbares Rastelement auf, welches drehfest mit dem Gelenk verbunden ist. Das federbelastete Kugelelement ist hierbei durch Verschwenkung des Kraftübertragungselements betätigbar. Bei Erreichen der geöffneten Position des beweglichen Gepäckfachelements rastet das federbelastete Kugelelement zumindest teilweise in der Rastausnehmung des Rastelementes des Kraftübertragungselementes ein, wenn das Kraftübertragungselement im unbeladenen Zustand des Gepäckfaches in der oberen, aktiven Stellung angeordnet ist. Beim Schließen des Gepäckfaches kann das Kugelelement gegen Federkraft aus der Rastausnehmung des verschwenkbaren Rastelements gedrückt werden. Zur Freigabe des Kugelelements ist daher eine Kraft erforderlich, welche das Haltemoment in der geöffneten Position des beweglichen Gepäckfachelementes bewirkt. Beim Verschwenken in die Offenstellung kann das Kugelelement an der Oberfläche des Kraftübertragungselements gleiten.

Bei dieser Ausführung ist es zudem günstig, wenn das Federelement zur Vorspannung des Kraftübertragungselements in Richtung der aktiven Stellung zumindest ein weiteres federbelastetes Kugelelement, vorzugsweise zwei federbelastete Kugelelemente, aufweist. Das zumindest eine weitere federbelastete Kugelelement zur Vorspannung des Kraftübertragungselements einerseits und das federbelastete Kugelelement zur Verrastung in der geöffneten Position des beweglichen Gepäckfachelementes andererseits sind bevorzugt auf gegenüberliegenden Seiten des Kraftübertragungselements angeordnet. Wenn das Gewicht des Gepäckstücks in dem beweglichen Gepäckfachelement einen festgelegten Wert überschreitet, wird das Kraftübertragungselement gegen die Kraft des zumindest einen weiteren federbelasteten Kugelelements in die inaktive Stellung abgesenkt, so dass die Rastelemente in der geöffneten Position des beweglichen Gepäckfachelements in der Freigabestellung angeordnet sind. In diesem Fall kann der Schließvorgang ohne die Aufbringung des Haltemoments eingeleitet werden.

Gemäß einer weiteren bevorzugten Ausführung weist das Kraftübertragungselement eine Reibfläche auf, mit welcher eine vom Beladungszustand des beweglichen Gepäckfachelements abhängige Reibkraft auf eine entsprechende Reibfläche des Kontaktelements übertragbar ist. In der aktiven Stellung des Kraftübertragungselements wird eine stärkere Reibkraft auf das Kontaktelement übertragen als in der inaktiven Stellung des Kraftübertragungselements, da die Reibkraft maßgeblich von der Normalkraft zwischen den Reibflächen abhängt, welche durch die gewichtsabhängige Stellung des Kraftübertragungselements beeinflusst wird. Im beladenen Zustand können die Reibflächen zumindest in der geöffneten Position des Gepäckfaches in einem Abstand zueinander angeordnet sein, so dass die Reibung zwischen den Reibflächen zur Gänze verschwindet. Je nach Ausführung kann im beladenen Zustand eine Reibkraft zwischen den Reibflächen vorhanden sein, welche jedoch geringer als im unbeladenen Zustand ist.

Um die gewichtsabhängige Einstellung des Haltemoments in der geöffneten Position mit möglichst geringen Anpassungen an der Aufhängung des beweglichen Gepäckfachelementes zu bewerkstelligen, ist es vorteilhaft, wenn die Reibfläche am Umfang des gemeinsam mit dem beweglichen Gepäckfachelement verschwenkbaren Kraftübertragungselement vorgesehen ist. Bei dieser Ausführung kann das Kontaktelement eine entsprechende Reibfläche aufweisen, an welcher die Reibfläche des Kraftübertragungselements beim Schließen des Gepäckfaches gleitet.

Um die Reibung zwischen den Reibflächen im unbeladenen Zustand des Gepäckfaches zu erhöhen, ist es günstig, wenn die Reibfläche an dem Kraftübertragungselement und/oder an dem Kontaktelement ein rutschhemmendes Material aufweist.

Gemäß einer besonders bevorzugten Ausführung ist vorgesehen, dass das Kraftübertragungselement derart gelagert ist, dass das Gelenk zwischen dem feststehenden Gepäckfachelement und dem beweglichen Gepäckfachelement im beladenen Zustand während des Schließvorganges angehoben wird. Bei dieser Ausführung ist das Kraftübertragungselement, welches vorzugsweise mit einem Rastelement ausgebildet ist, derart bezüglich des feststehenden Gepäckfachelementes gelagert, dass das Gelenk beim Schließen des beladenen Gepäckfaches angehoben wird. Demnach wird das Gelenk in der geöffneten Position durch die Beladung mit dem Gepäckstück abgesenkt, wodurch die Rastelemente in der inaktiven Stellung angeordnet werden. Beim Schließen wird das Gelenk durch die Lagerung des Kraftübertragungselementes angehoben. Vorteilhafterweise kann so zuverlässig sichergestellt werden, dass das Gepäckfach in der geschlossenen Position spaltfrei angeordnet wird.

Zu diesem Zweck ist bei einer ersten bevorzugten Ausführungsvariante vorgesehen, dass das Kraftübertragungselement als Nockenelement mit einer unrunden Lagerfläche ausgebildet ist. In der Offenstellung des beladenen Gepäckfaches ist das nockenförmige Kraftübertragungselement in einer liegenden Position angeordnet. Beim Schließen des Gepäckfaches wird das nockenförmige Kraftübertragungselement in eine aufrechte Position überführt, wobei das Gelenk zwischen dem beweglichen und dem feststehenden Gepäckfachelement durch die Lagerung am feststehenden Gepäckfachelement entsprechend angehoben wird. Das Kraftübertragungselement kann insbesondere eine ovale Lagerfläche aufweisen, welche an einer runden Lagerfläche des feststehenden Gepäckfachelementes gelagert ist.

Gemäß einer alternativen Ausführungsvariante ist vorgesehen, dass das Kraftübertragungselement mit einem Anschlag verbunden ist, mit welchem das Kraftübertragungselement mit dem Gelenk bei Erreichen der geschlossenen Position anhebbar ist. Durch den Anschlag wird das Gelenk angehoben, wenn das beladene Gepäckfach die geschlossene Position erreicht. Dadurch kann eine Spaltbildung in der geschlossenen Position trotz Beladung verhindert werden.

Die Erfindung wird nachstehend anhand von bevorzugten Ausführungsbeispielen, auf welche die Erfindung nicht beschränkt sein soll, noch weiter erläutert. Im Einzelnen zeigen in der Zeichnung:

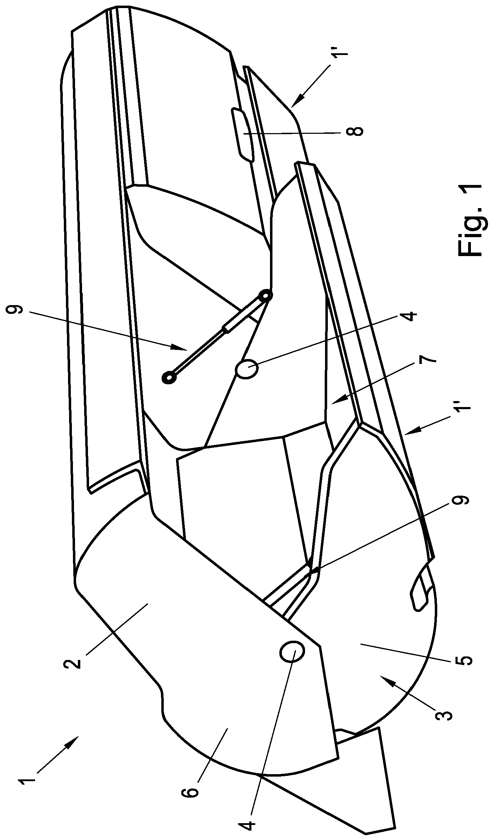

Fig. 1 eine schaubildliche Ansicht eines Überkopf-Gepäckfachs für Flugzeuge, wobei ein bewegliches Gepäckfachelement mittels Gelenken verschwenkbar an einem feststehenden Gepäckfachelement gelagert ist;

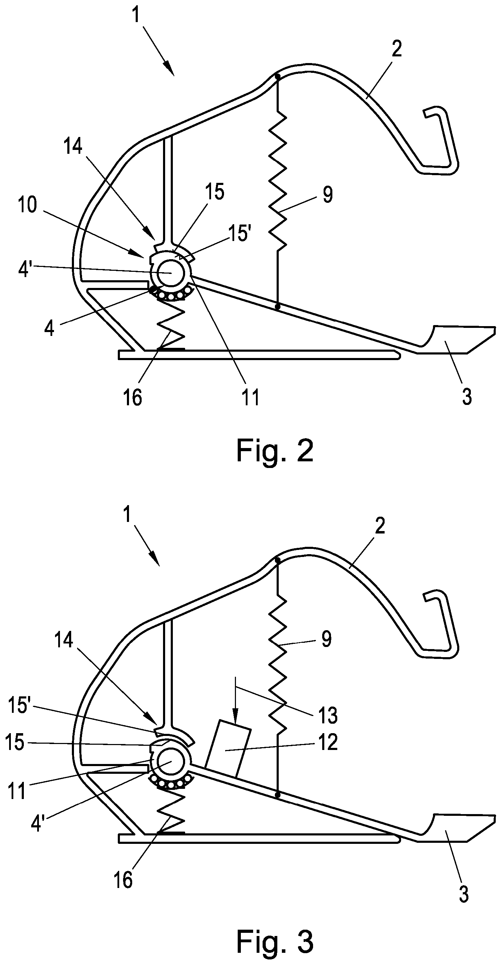

Fig. 2, 3 eine erfindungsgemäße Ausführung des Überkopf-Gepäckfachs, bei welchem die Gelenke mit Kraftübertragungselementen gekoppelt sind, welche in der geöffneten Position des beweglichen Gepäckfachelements mittels aufeinandergleitender Reibflächen ein vom Beladungszustand abhängiges Haltemoment auf das bewegliche Gepäckfachelement ausüben, wobei in Fig. 2 das Gepäckfach im unbeladenen Zustand und in Fig. 3 im beladenen Zustand dargestellt ist;

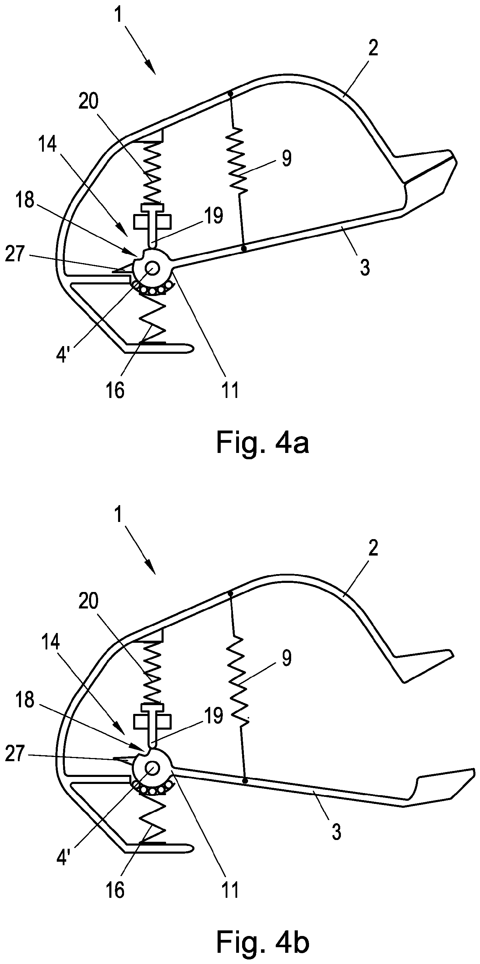

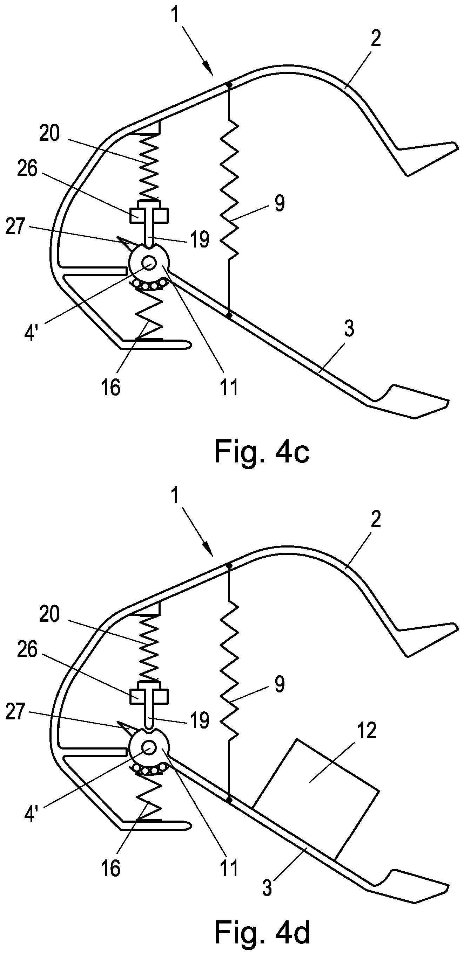

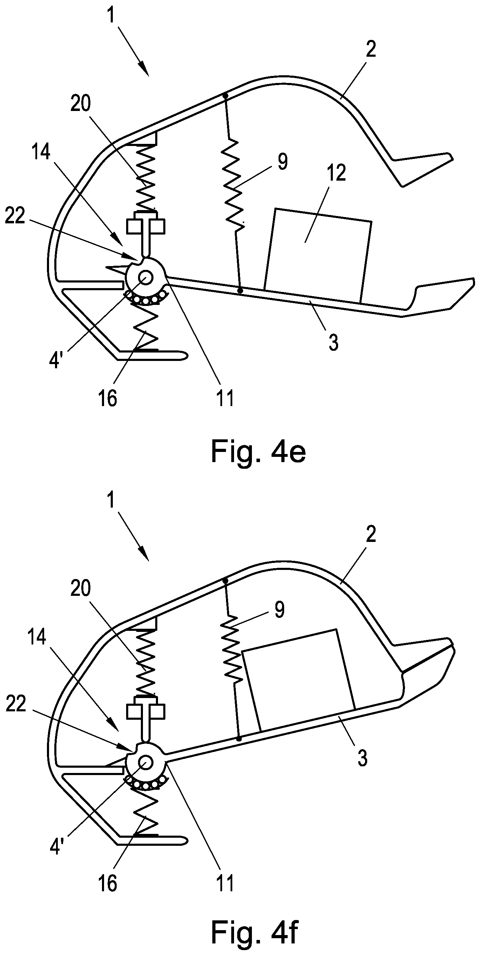

Fig. 4 eine weitere erfindungsgemäße Ausführungsform des Überkopf-Gepäckfaches in verschiedenen Stellungen, wobei die Gelenke zwischen dem beweglichen und dem feststehenden Gepäckfachelement mit Rastelementen verbunden sind, welche im unbeladenen Zustand in der geöffneten Position des beweglichen Gepäckfachelements (vgl. Fig. 4c) verrastet sind, so dass beim Verschwenken in Richtung der geschlossenen Position (vgl. Fig. 4f) das Haltemoment überwunden werden muss, wobei die Rastelemente im beladenen Zustand im unverrasteten Zustand vorliegen (vgl. Fig. 4d);

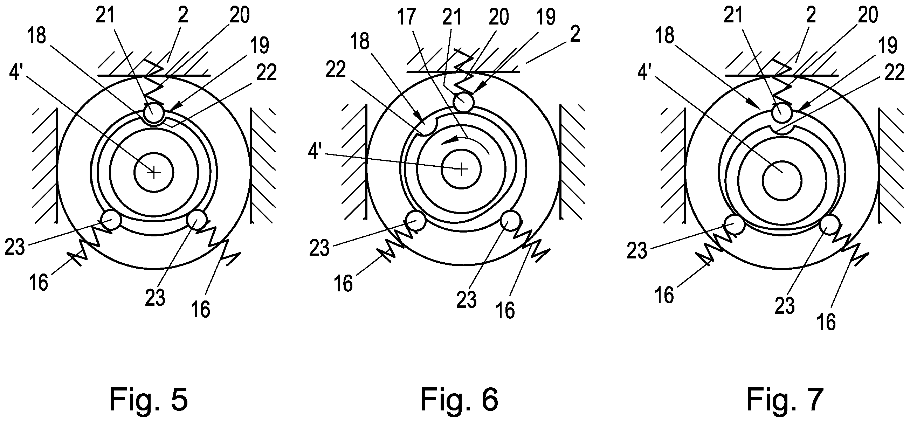

Fig. 5 bis 7 eine Abwandlung der Ausführungsform gemäß Fig. 4 mit einem Kugelelement als Rastelement, wobei Fig. 5 den verrasteten Zustand in der unbeladenen Offenstellung des Gepäckfaches, Fig. 7 den nicht verrasteten Zustand in der beladenen Offenstellung des Gepäckfaches und Fig. 6 eine Stellung während dem Schließen des Gepäckfaches zeigt; und

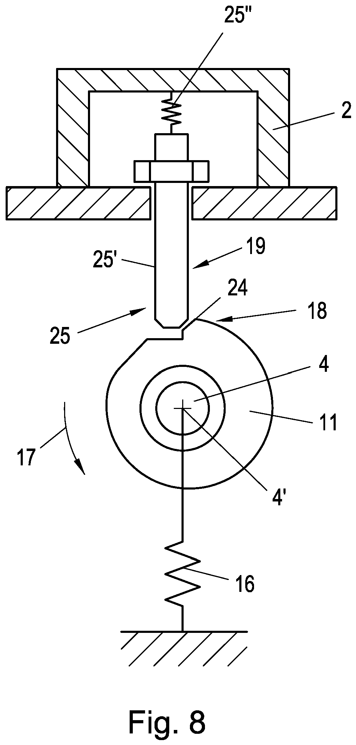

Fig. 8 eine weitere erfindungsgemäße Ausführungsform mit einer alternativen Ausgestaltung der Rastelemente, welche im unbeladenen Zustand des beweglichen Gepäckfachelements verrastet und im beladenen Zustand freigegeben sind.

In Fig. 1 ist ein Überkopf-Gepäckfach 1 für Flugzeuge gezeigt, welches in der gezeigten Ausführung zwei ident ausgebildete Gepäckfachmodule 1' aufweist. Selbstverständlich kann jedoch auch nur ein solches Gepäckfachmodul 1' oder mehr als zwei solche Gepäckfachmodule 1' vorgesehen sein. Die Gepäckfachmodule 1' weisen jeweils ein feststehendes Gepäckfachelement 2 auf, welches an einem Strukturelement, insbesondere an einem Flugzeugrumpf (nicht gezeigt), befestigbar ist. Darüber hinaus weist das Gepäckfach 1 ein bewegliches Gepäckfachelement 3 auf, welches zur Aufnahme von Gepäckstücken als Mulde, Halbschütte bzw. U-förmiges Gepäckfach ausgebildet sein kann. Das bewegliche Gepäckfachelement 3 ist beidseitig über Gelenke 4 mit Gelenkachsen 4' an dem feststehenden Gepäckfachelement 2 aufgehängt. Die Gelenke 4 befinden sich an überlappenden Abschnitten von Seitenwänden 5 des beweglichen Gepäckfachelements 3 und Seitenwänden 6 des feststehenden Gepäckfachelements 2. Das bewegliche Gepäckfachelement 2 ist zwischen einer geöffneten Position (vgl. das linke Gepäckfachmodul 1' in Fig. 1), in welcher eine Ladeöffnung 7 freigegeben ist, und einer geschlossenen Position (vgl. das rechte Gepäckfachmodul 1' in Fig. 1), in welcher die Ladeöffnung 7 verschlossen ist, verschwenkbar. Zu diesem Zweck weist das bewegliche Gepäckfachelement 3 an der Sichtseite ein Griffelement 8 auf, mit welchem das Gepäckfach 1 geöffnet bzw. geschlossen werden kann. Weiters sind aus Fig. 1 Hebefedern 9 zwischen dem beweglichen Gepäckfachelement 3 und dem feststehenden Gepäckfachelement 2 ersichtlich, mit welchen die Verschwenkung des beweglichen Gepäckfachelements 3 aus der geöffneten Position in die geschlossene Position unterstützt wird. Das Federelement ist bevorzugt mit einem Dämpfungselement (nicht gezeigt) verbunden.

Wie aus Fig. 2, 3 ersichtlich, weist das Gepäckfach 1 zudem eine Einrichtung 10 zum Halten des beweglichen Gepäckfachelements 3 in der geöffneten Position auf, welche zur Erfassung eines Beladungszustands des beweglichen Gepäckfachelements 3 eingerichtet ist. In der gezeigten Ausführung weist die Einrichtung 10 ein Kraftübertragungselement 11 auf, welches mit dem Gelenk 4 zwischen dem feststehenden Gepäckfachelement 2 und dem beweglichen Gepäckfachelement 3 verbunden ist. Selbstverständlich können beide gegenüberliegende Gelenke 4 des Gepäckfaches 1 ident aufgebaut sein. Das Gelenk 4 ist in der geöffneten Position des beweglichen Gepäckfachelements (vgl. Fig. 2) in Abhängigkeit vom Beladungszustand des beweglichen Gepäckfachelements 3 in vertikaler Richtung verschieblich. In Fig. 3 ist schematisch ein Gepäckstück mit einem Gewicht 12 veranschaulicht, welches eine Kraft in Pfeilrichtung 13 bewirkt. Durch die gewichtsabhängige Verschiebung des Gelenks 4 wird das Kraftübertragungselement 11 im unbeladenen Zustand (vgl. Fig. 2) in einer aktiven Stellung und im beladenen Zustand (vgl. Fig. 3) in einer inaktiven Stellung angeordnet. In der aktiven Stellung des Kraftübertragungselements 11 wird ein der Verschwenkung des beweglichen Gepäckfachelements 3 aus der geöffneten Position in Richtung der geschlossenen Position entgegenwirkendes Haltemoment ausgeübt, so dass das bewegliche Gepäckfachelement 3 in der geöffneten Position gehalten ist. Zu diesem Zweck weist das feststehende Gepäckfachelement 2 ein Kontaktelement 14 auf, welches in der aktiven Stellung mit dem Kraftübertragungselement 11 in Eingriff steht, wobei in der inaktiven Stellung des Kraftübertragungselements 11 der Eingriff zwischen dem Kraftübertragungselement 11 und dem Kontaktelement 14 gelöst ist.

Gemäß Fig. 2, 3 weist das Kraftübertragungselement 11 eine Reibfläche 15 auf, mit welcher eine vom Beladungszustand des beweglichen Gepäckfachelements 3 abhängige Reibkraft auf eine entsprechende Reibfläche 15' des Kontaktelements übertragbar ist. In der gezeigten Ausführung ist die Reibfläche 15 am Umfang des Kraftübertragungselements 11 vorgesehen, welches drehfest mit dem Gelenk 4 verbunden ist. Demnach wird das Kraftübertragungselement 11 beim Schließen des Gepäckfaches 1 gemeinsam mit dem beweglichen Gepäckfachelement 3 verschwenkt. Im unbeladenen Zustand des Gepäckfaches 1 (vgl. Fig. 2) wird durch die Reibung zwischen den Reibflächen 15, 15' ein Reibmoment erzeugt, welches beim Schließen des Gepäckfaches 1 vom Benutzer überwunden wird. Zur Einstellung eines passenden Halte- bzw. Reibmomentes kann die Reibfläche 15 an dem Kraftübertragungselement 11 und/oder die Reibfläche 15' an dem Kontaktelement 14 ein rutschhemmendes Material aufweisen.

Wie aus Fig. 2, 3 weiters ersichtlich, ist zumindest ein Federelement 16 zur Vorspannung des Kraftübertragungselements 11 in Richtung der aktiven Stellung vorgesehen. Durch Beladung des beweglichen Gepäckfachelements 3 mit dem Gepäckstück, vgl. das Gewicht 12 in Fig. 3, wird das Kraftübertragungselement 11 gegen die Kraft des Federelements 16 im Wesentlichen in vertikaler Richtung nach unten in die inaktive Stellung verlagert. Dadurch werden die Reibflächen 15, 15' in einem Abstand zueinander angeordnet, so dass das Reib- bzw. Haltemoment der Halteeinrichtung 10 in der geöffneten Position des beweglichen Gepäckfachelements 3 verschwindet.

In Fig. 4 ist eine alternative Ausführung des Kraftübertragungselements 11 gezeigt, wobei die Aufhängung des Gelenks 4 an dem Gepäckfach 1 der besseren Übersicht halber lediglich schematisch eingezeichnet ist. In Fig. 4a bis Fig. 4c ist der Öffnungsvorgang des Gepäckfaches im unbeladenen zustand dargestellt, wobei Fig. 4a die Schließstellung, Fig. 4b eine Zwischenstellung und Fig. 4c eine Offenstellung zeigt. Die Fig. 4d bis Fig. 4f veranschaulichen den Schließvorgang eines beladenen Gepäckfaches, wobei Fig. 4d die Offenstellung, Fig. 4e die Zwischenstellung und Fig. 4f die Schließstellung zeigt.

Wie aus Fig. 4 ersichtlich, ist das Kraftübertragungselement 11 auch bei dieser Ausführung drehfest mit dem Gelenk 4 zwischen dem beweglichen Gepäckfachelement 3 und dem feststehenden Gepäckfachelement 2 verbunden, so dass das Kraftübertragungselement 11 durch Verschwenkung des beweglichen Gepäckfachelements 3 verschwenkbar ist.

Gemäß Fig. 4 weist das Kraftübertragungselement 11 ein Rastelement 18 in Form einer Rastausnehmung 22 auf, welches mit einem entsprechenden, riegelförmigen Rastelement 19 des Kontaktelements 14 zusammenwirkt. Je nach Beladungszustand sind die Rastelemente 18, 19 in der geöffneten Position des beweglichen Gepäckfachelements 3 in einer verrasteten Stellung (vgl. Fig. 4c) oder in einer Freigabestellung (vgl. Fig. 4d) angeordnet. Das Rastelement 19 des Kontaktelements 14 ist mit einer Haltefeder 20 verbunden, so dass das Rastelement 19 des Kontaktelements 14 im unbeladenen Zustand des Gepäckfaches 1 gegen die Kraft der Haltefeder 20 aus der verrasteten Stellung (vgl. Fig. 4c) in Richtung der Freigabestellung (vgl. Fig. 4b) verschieblich ist.

In Fig. 4 ist zudem schematisch ein Anschlag 26 ersichtlich, mit welchem die Bewegung des Rastelementes 19 begrenzt wird. Zudem ist schematisch ein Anschlag 27 eingezeichnet, mit welchem sichergestellt wird, dass die Gelenkachse 4' im beladenen Zustand bei Erreichen der geschlossenen Position des Gepäckfaches 1 in eine Lage angehoben wird, in welcher das Gepäckfach 1 spaltfrei geschlossen ist.

Gemäß Fig. 5 bis 7 ist das Rastelement 19 des Kontaktelements 14 durch ein mit dem Federelement 20 belastetes Kugelelement 21 gebildet, welches mit einer Rastausnehmung 22 des Kraftübertragungselements 11 zusammenwirkt. Selbstverständlich kann alternativ die Rastausnehmung 22 an dem Rastelement 19 und das Kugelelement 21 an dem Kraftübertragungselement 11 vorgesehen sein. In der geöffneten Position des beweglichen Gepäckfachelements 3 ist das Kugelelement 21 teilweise innerhalb der Rastausnehmung 22 des Rastelements 18 des Kraftübertragungselements 11 angeordnet, wenn das Kraftübertragungselement 11 im unbeladenen Zustand des Gepäckfaches 1 in der oberen, aktiven Stellung vorliegt. Im beladenen Zustand ist das Kugelelement 21 außerhalb der Rastausnehmung 22 des Rastelements 18 des Kraftübertragungselements 11 angeordnet. Beim Schließen des Gepäckfaches 1 wird das Kraftübertragungselement 11 in Pfeilrichtung 17 verschwenkt (vgl. Fig. 6), wobei die Rastelemente 18, 19 aus ihrem Rasteingriff gelöst werden.

Wie aus Fig. 5 bis 7 weiters ersichtlich, weist das Federelement 16 zur Vorspannung des Kraftübertragungselements 11 in Richtung der aktiven Stellung bei dieser Ausführung zwei weitere federbelastete Kugelelemente 23 auf, welche an der entsprechenden Lagerfläche des Kraftübertragungselements 11 abrollen. Das Kraftübertragungselement 11 mit dem Rastelement 18 ist in der gezeigten Ausführung als Nockenelement mit einer unrunden, beispielsweise ovalen, Lagerfläche ausgebildet. Dadurch wird bewirkt, dass die Gelenkachse 4' während des Schließvorganges im beladenen Zustand in die Ausgangslage vor der Beladung angehoben wird. Auf diese Weise wird das Gepäckfach in der geschlossenen Position spaltfrei angeordnet.

Gemäß Fig. 8 ist das Rastelement 18 des Kraftübertragungselements 11 als drehfest mit dem Gelenk 4 verbundene Rastscheibe ausgebildet, welche einen Rastvorsprung 24 zur Verrastung mit dem Rastelement 19 des Kontaktelements 14 aufweist. In der gezeigten Ausführung ist das Rastelement 19 des Kontaktelements 14 durch einen Federriegel 25 mit einem Riegelelement 25' und einem Federelement 25" gebildet. Der Federriegel 25 ist durch das Rastelement 18 des Kraftübertragungselements 11 zwischen der verrasteten Stellung (vgl. Fig. 7) und der Freigabestellung (nicht gezeigt) verschieblich, indem das bewegliche Gepäckfachelement 3 aus der geöffneten Position in Richtung der geschlossenen Position verschwenkt wird.

## Patentansprüche

1. Überkopf-Gepäckfach (1) für Flugzeuge, mit einem an einem Strukturelement befestigbaren feststehenden Gepäckfachelement (2) und mit einem mit einem Gepäckstück beladbaren beweglichen Gepäckfachelement (3), wobei das feststehende Gepäckfachelement (2) und das bewegliche Gepäckfachelement (3) über ein Gelenk (4) mit einer Gelenkachse (4') miteinander verbunden sind, so dass das bewegliche Gepäckfachelement (3) zwischen einer geöffneten Position und einer geschlossenen Position verschwenkbar ist, und mit einer Einrichtung (10) zum Halten des beweglichen Gepäckfachelements (3) in der geöffneten Position, wobei das Gelenk (4) in der geöffneten Position des beweglichen Gepäckfachelements (3) in Abhängigkeit vom Beladungszustand des beweglichen Gepäckfachelements (3), durch Beladung des beweglichen Gepäckfachelements (3) verschieblich ist, **dadurch gekennzeichnet, dass** die Einrichtung (10) zum Halten des beweglichen Gepäckfachelements (3) in der geöffneten Position ein mit dem Gelenk (4) zwischen dem feststehenden Gepäckfachelement (2) und dem beweglichen Gepäckfachelement (3) verbundenes Kraftübertragungselement (11) aufweist, wobei das Kraftübertragungselement (11) in der geöffneten Position des beweglichen Gepäckfachelements (3) durch die Verschiebung des Gelenks (4) im unbeladenen Zustand in einer aktiven Stellung und im beladenen Zustand in einer inaktiven Stellung angeordnet ist, wobei das feststehende Gepäckfachelement (2) ein Kontaktelement (14) aufweist, welches in der aktiven Stellung mit dem Kraftübertragungselement (11) in Eingriff steht, wobei in der inaktiven Stellung des Kraftübertragungselements (11) der Eingriff zwischen dem Kraftübertragungselement (11) und dem Kontaktelement (14) gelöst ist, wobei das Kraftübertragungselement (11) dazu eingerichtet ist, dass in der inaktiven Stellung des Kraftübertragungselements (11) ein geringeres der Verschwenkung des beweglichen Gepäckfachelements (3) aus der geöffneten Position in Richtung der geschlossenen Position entgegenwirkendes Haltemoment als in der aktiven Stellung des Kraftübertragungselements (11) ausgeübt wird.

2. Überkopf-Gepäckfach (1) nach Anspruch 1, **dadurch gekennzeichnet, dass** das Kraftübertragungselement (11) in Abhängigkeit vom Beladungszustand, bezogen auf einen an einem Flugzeugrumpf befestigten Zustand des Überkopf-Gepäckfaches (1), im Wesentlichen in vertikaler Richtung zwischen der aktiven Stellung und der inaktiven Stellung verlagerbar ist.

3. Überkopf-Gepäckfach (1) nach Anspruch 1 oder 2, **dadurch gekennzeichnet, dass** zumindest ein Federelement (16) zur Vorspannung des Kraftübertragungselements (11) in Richtung der aktiven Stellung vorgesehen ist.

4. Überkopf-Gepäckfach (1) nach einem der Ansprüche 1 bis 3, **dadurch gekennzeichnet, dass** zwischen dem beweglichen Gepäckfachelement (3) und dem feststehenden Gepäckfachelement (2) eine Hebefeder (9) vorgesehen ist, mit welcher die Verschwenkung des beweglichen Gepäckfachelements (3) aus der geöffneten Position in die geschlossene Position unterstützt wird.

5. Überkopf-Gepäckfach (1) nach einem der Ansprüche 1 bis 4, **dadurch gekennzeichnet, dass** das Kraftübertragungselement (11) drehfest mit dem Gelenk (4) zwischen dem beweglichen Gepäckfachelement (3) und dem feststehenden Gepäckfachelement (2) verbunden ist, so dass das Kraftübertragungselement (11) durch Verschwenkung des beweglichen Gepäckfachelements (3) verschwenkbar ist.

6. Überkopf-Gepäckfach (1) nach einem der Ansprüche 1 bis 5, **dadurch gekennzeichnet, dass** das Kraftübertragungselement (11) und das Kontaktelement (14) korrespondierende Rastelemente (18, 19) aufweisen, wobei die Rastelemente (18, 19) in der geöffneten Position des beweglichen Gepäckfachelements (3) je nach Beladungszustand in einer verrasteten Stellung oder in einer Freigabestellung angeordnet sind.

7. Überkopf-Gepäckfach (1) nach Anspruch 6, **dadurch gekennzeichnet, dass** das Rastelement (19) des Kontaktelements (14) mit einer Haltefeder (20) verbunden ist, so dass das Rastelement (19) des Kontaktelements (14) gegen die Kraft der Haltefeder (20) in Richtung der Freigabestellung verschieblich ist.

8. Überkopf-Gepäckfach (1) nach Anspruch 6 oder 7, **dadurch gekennzeichnet, dass** das Rastelement (18) des Kraftübertragungselements (11) als Rastscheibe ausgebildet ist, welche einen Rastvorsprung (24) zur Verrastung mit dem Rastelement (19) des Kontaktelements (14) aufweist.

9. Überkopf-Gepäckfach (1) nach einem der Ansprüche 6 bis 8, **dadurch gekennzeichnet, dass** das Rastelement (19) des Kontaktelements (14) durch einen Federriegel (25) gebildet ist, welcher durch das Rastelement (18) des Kraftübertragungselements (11) zwischen der verrasteten Stellung und der Freigabestellung verschieblich ist.

10. Überkopf-Gepäckfach (1) nach Anspruch 6 oder 7, **dadurch gekennzeichnet, dass** das Rastelement (19) des Kontaktelements (14) durch ein federbelastetes Kugelelement (21) gebildet ist, welches in der geöffneten Position des beweglichen Gepäckfachelements (3) im unbeladenen Zustand innerhalb einer entsprechenden Rastausnehmung (22) des Rastelements (18) des Kraftübertragungselements (11) und im beladenen Zustand außerhalb der Rastausnehmung (22) des Rastelements (18) des Kraftübertragungselements (11) angeordnet ist.

11. Überkopf-Gepäckfach (1) nach Anspruch 10, **dadurch gekennzeichnet, dass** das Federelement (16) zur Vorspannung des Kraftübertragungselements (11) in Richtung der aktiven Stellung zumindest ein weiteres federbelastetes Kugelelement (23), vorzugsweise zwei federbelastete Kugelelemente (23), aufweist.

12. Überkopf-Gepäckfach (1) nach einem der Ansprüche 1 bis 5, **dadurch gekennzeichnet, dass** das Kraftübertragungselement (11) eine Reibfläche (15) aufweist, mit welcher eine vom Beladungszustand des beweglichen Gepäckfachelements (3) abhängige Reibkraft auf eine entsprechende Reibfläche (15') des Kontaktelements (14) übertragbar ist, wobei bevorzugt die Reibfläche (15, 15') an dem Kraftübertragungselement (11) und/oder an dem Kontaktelement (14) ein rutschhemmendes Material aufweist.

13. Überkopf-Gepäckfach (1) nach Anspruch 12, **dadurch gekennzeichnet, dass** die Reibfläche (15) am Umfang des gemeinsam mit dem beweglichen Gepäckfachelement (3) verschwenkbaren Kraftübertragungselement (11) vorgesehen ist.

14. Überkopf-Gepäckfach (1) nach einem der Ansprüche 1 bis 13, **dadurch gekennzeichnet, dass** das Kraftübertragungselement (11) derart gelagert ist, dass das Gelenk (4) zwischen dem feststehenden Gepäckfachelement (2) und dem beweglichen Gepäckfachelement (3) im beladenen Zustand während des Schließvorganges angehoben wird, wobei das Kraftübertragungselement (11) vorzugsweise als Nockenelement mit einer unrunden Lagerfläche ausgebildet ist oder das Kraftübertragungselement (11) mit einem Anschlag (27) verbunden ist, mit welchem das Kraftübertragungselement (11) mit dem Gelenk (4) bei Erreichen der geschlossenen Position anhebbar ist.

15. Flugzeug mit einem Strukturelement, an welchem ein Überkopf-Gepäckfach (1) montiert ist, **dadurch gekennzeichnet, dass** das Überkopf-Gepäckfach (1) nach einem der Ansprüche 1 bis 14 ausgebildet ist.

## Claims

1. An overhead luggage compartment (1) for airplanes, comprising a stationary luggage compartment element (2) which can be secured to a structural element and comprising a movable luggage compartment element (3) which can be loaded with a piece of luggage, the stationary luggage compartment element (2) and the movable luggage compartment element (3) being connected together by a joint (4) having a joint axis (4') such that the movable luggage compartment element (3) can be pivoted between an open position and a closed position, and comprising a device (10) for holding the movable luggage compartment element (3) in the open position, wherein in the open position of the movable luggage compartment element (3) the joint (4) being movable depending on the load state of the movable luggage compartment element (3), by loading the movable luggage compartment element (3), **characterized in that** the device (10) for holding the movable luggage compartment element (3) in the open position comprises a force transmission element (11) which is connected to the joint (4) between the stationary luggage compartment element (2) and the movable luggage compartment element (3), wherein when the movable luggage compartment element (3) is in the open position, the force transmission element (11) is arranged in an active position in the unloaded state and in an inactive position in the loaded state by means of a movement of the joint (4), wherein the stationary luggage compartment element (2) comprises a contact element (14) which in the active position is engaged with the force transmission element (11), wherein in the inactive position of the force transmission element (11) the engagement between the force transmission element (11) and the contact element (14) is released, the force transmission element (11) being adapted such that in the inactive position of the force transmission element (11) a holding torque is exerted that counteracts the pivot of the movable luggage compartment element (3) from the open position in the direction of the closed position, which holding torque is lower than in the active position of the force transmission element (11).

2. The overhead luggage compartment (1) according to claim 1, **characterized in that** the force transmission element (11) can be moved essentially in the vertical direction between the active position and the inactive position, depending on the load state, related to a state of the overhead luggage compartment (1) attached to a fuselage.

3. The overhead luggage compartment (1) according to claim 1 or 2, **characterized in that** at least one spring element (16) for biasing the force transmission element (11) in the direction of the active position is provided.

4. The overhead luggage compartment (1) according to one of claims 1 to 3, **characterized in that** a lifting spring (9) is provided between the movable luggage compartment element (3) and the stationary luggage compartment element (2), by means of which lifting spring (9) the pivot of the movable luggage compartment element (3) from the open position into the closed position is supported.

5. The overhead luggage compartment (1) according to one of claims 1 to 4, **characterized in that** the force transmission element (11) is connected to the joint (4) between the movable luggage compartment element (3) and the stationary luggage compartment element (2) in a torque-proof manner such that the force transmission element (11) can be pivoted by pivoting the movable luggage compartment element (3).

6. The overhead luggage compartment (1) according to one of claims 1 to 5, **characterized in that** the force transmission element (11) and the contact element (14) comprise corresponding locking elements (18, 19), wherein the locking elements (18, 19) are arranged in a locked position or a release position in the open position of the movable luggage compartment element (3), depending on the load state.

7. The overhead luggage compartment (1) according to claim 6, **characterized in that** the locking element (19) of the contact element (14) is connected to a holding spring (20), such that the locking element (19) of the contact element (14) can be moved against the force of the holding spring (20) in the direction of the release position.

8. The overhead luggage compartment (1) according to claim 6 or 7, **characterized in that** the locking element (18) of the force transmission element (11) is designed as a locking disk comprising a locking projection (24) for locking with the locking element (19) of the contact element (14).

9. The overhead luggage compartment (1) according to one of claims 6 to 8, **characterized in that** the locking element (19) of the contact element (14) is formed by a spring lock (25) which can be moved by the locking element (18) of the force transmission element (11) between the locked position and release position.

10. The overhead luggage compartment (1) according to claim 6 or 7, **characterized in that** the locking element (19) of the contact element (14) is formed by a spring-loaded ball element (21), which when the movable luggage compartment element (3) is in the open position, in the unloaded state is arranged within a corresponding locking recess (22) of the locking element (18) of the force transmission element (11) and in the loaded state is arranged outside the locking recess (22) of the locking element (18) of the force transmission element (11).

11. The overhead luggage compartment (1) according to claim 10, **characterized in that** for biasing the force transmission element (11) in the direction of the active position, the spring element (16) comprises at least one further spring-loaded ball element (23), preferably two spring-loaded ball elements (23).

12. The overhead luggage compartment (1) according to one of claims 1 to 5, **characterized in that** the force transmission element (11) comprises a frictional surface (15), with which a frictional force depending on the load state of the movable luggage compartment element (3) can be transferred onto a corresponding frictional surface (15') of the contact element (14), preferably the frictional surface (15, 15') on the force transmission element (11) and/or on the contact element (14) comprising an anti-slip material.

13. The overhead luggage compartment (1) according to claim 12, **characterized in that** the frictional surface (15) is provided on the periphery of the force transmission element (11) jointly pivotable with the movable luggage compartment element (3).

14. The overhead luggage compartment (1) according to one of claims 1 to 13, **characterized in that** the force transmission element (11) is supported such that the joint (4) between the stationary luggage compartment element (2) and the movable luggage compartment element (3) is lifted in the loaded state during the closing operation, wherein the force transmission element (11) is preferably designed as cam element having a non-circular support surface or the force transmission element (11) is connected to a stop (27), by means of which the force transmission element (11) can be lifted together with the joint (4), upon reaching the closed position.

15. An airplane comprising a structural element, secured to which is an overhead luggage compartment (1), **characterized in that** the overhead luggage compartment (1) is designed according to one of claims 1 to 14.

## Revendications

1. Compartiment à bagages en hauteur (1) pour avions, avec un élément de compartiment à bagages fixe (2) pouvant être fixé à un élément de structure et avec un élément de compartiment à bagages mobile (3) pouvant être chargé avec un bagage, l'élément de compartiment à bagages fixe (2) et l'élément de compartiment à bagages mobile (3) étant reliés entre eux par l'intermédiaire d'une articulation (4) avec un axe d'articulation (4'), de façon à ce que l'élément de compartiment à bagages mobile (3) puisse être pivoté entre une position ouverte et une position fermée et avec un dispositif (10) permettant de maintenir l'élément de compartiment à bagages mobile (3) dans la position ouverte, l'articulation (4) pouvant être coulissée, dans la position ouverte de l'élément de compartiment à bagages mobile (3), en fonction de l'état de charge de l'élément de compartiment à bagages mobile (3), par la charge de l'élément de compartiment à bagages mobile (3), **caractérisé en ce que** le dispositif (10) permettant de maintenir l'élément de compartiment à bagages mobile (3) dans la position ouverte comprend un élément de transmission de force (11) relié avec l'articulation (4) entre l'élément de compartiment à bagages fixe (2) et l'élément de compartiment à bagages mobile (3), l'élément de transmission de force (11) étant disposé dans la position ouverte de l'élément de compartiment à bagages mobile (3) par le coulissement de l'articulation (4) dans l'état non chargé dans une position active et dans l'état chargé dans une position inactive, l'élément de compartiment à bagages fixe (2) comprenant un élément de contact (14) qui, dans la position active, s'emboîte avec l'élément de transmission de force (11), l'emboîtement entre l'élément de transmission de force (11) et l'élément de contact (14) étant détaché dans la position inactive de l'élément de transmission de force (11), l'élément de transmission de force (11) étant conçu de façon à ce que, dans la position inactive de l'élément de transmission de force (11), un couple de maintien contrant le pivotement de l'élément de compartiment à bagages mobile (3) de la position ouverte en direction de la position fermée, plus faible que dans la position active de l'élément de transmission de force (11), est exercé.

2. Compartiment à bagages en hauteur (1) selon la revendication 1, **caractérisé en ce que** l'élément de transmission de force (11) peut être déplacé, en fonction de l'état de charge, par rapport à un état fixé à une carlingue d'avion du compartiment à bagages en hauteur (1), globalement dans une direction verticale entre la position active et la position inactive.

3. Compartiment à bagages en hauteur (1) selon la revendication 1 ou 2, **caractérisé en ce qu'**au moins un élément de ressort (16) est prévu pour la précontrainte de l'élément de transmission de force (11) en direction de la position active.

4. Compartiment à bagages en hauteur (1) selon l'une des revendications 1 à 3, **caractérisé en ce que**, entre l'élément de compartiment à bagages mobile (3) et l'élément de compartiment à bagages fixe (2), est prévu un ressort de levage (9) permettant d'assister le pivotement de l'élément de compartiment à bagages mobile (3) de la position ouverte vers la position fermée.

5. Compartiment à bagages en hauteur (1) selon l'une des revendications 1 à 4, **caractérisé en ce que** l'élément de transmission de force (11) est relié de manière solidaire en rotation avec l'articulation (4) entre l'élément de compartiment à bagages mobile (3) et l'élément de compartiment à bagages fixe (2), de façon à ce que l'élément de transmission de force (11) puisse être pivoté grâce au pivotement de l'élément de compartiment à bagages mobile (3).

6. Compartiment à bagages en hauteur (1) selon l'une des revendications 1 à 5, **caractérisé en ce que** l'élément de transmission de force (11) et l'élément de contact (14) comprennent des éléments d'encliquetage (18, 19), les éléments d'encliquetage (18, 19) étant disposés, dans la position ouverte de l'élément de compartiment à bagages mobile, (3), selon l'état de charge, dans une position encliquetée ou dans une position déverrouillée.

7. Compartiment à bagages en hauteur (1) selon la revendication 6, **caractérisé en ce que** l'élément d'encliquetage (19) de l'élément de contact (14) est relié avec un ressort de maintien (20), de façon à ce que l'élément d'encliquetage (19) de l'élément de contact (14) puisse coulisser à l'encontre de la force du ressort de maintien (20) en direction de la position déverrouillée.

8. Compartiment à bagages en hauteur (1) selon la revendication 6 ou 7, **caractérisé en ce que** l'élément d'encliquetage (18) de l'élément de transmission de force (11) est conçu comme un disque d'encliquetage qui comprend une saillie d'encliquetage (24) pour l'encliquetage avec l'élément d'encliquetage (19) de l'élément de contact (14).

9. Compartiment à bagages en hauteur (1) selon l'une des revendications 6 à 8, **caractérisé en ce que** l'élément d'encliquetage (19) de l'élément de contact (14) est constitué d'un verrou à ressort (25) qui peut être coulissé grâce à l'élément d'encliquetage (18) de l'élément de transmission de force (11) entre la position encliquetée et la position déverrouillée.

10. Compartiment à bagages en hauteur (1) selon la revendication 6 ou 7, **caractérisé en ce que** l'élément d'encliquetage (19) de l'élément de contact (14) est constitué d'un élément sphérique muni d'un ressort (21) qui, dans la position ouverte de l'élément de compartiment à bagages mobile (3), dans l'état non chargé, est disposé à l'intérieur d'un évidement d'encliquetage (22) de l'élément d'encliquetage (18) de l'élément de transmission de force (11) et, dans l'état non chargé, à l'extérieur de l'évidement d'encliquetage (22) de l'élément d'encliquetage (18) de l'élément de transmission de force (11).

11. Compartiment à bagages en hauteur (1) selon la revendication 10, **caractérisé en ce que** l'élément de ressort (16) comprend, pour la précontrainte de l'élément de transmission de force (11) en direction de la position active, au moins un élément sphérique muni d'un ressort (23), de préférence deux éléments sphériques munis de ressorts (23).

12. Compartiment à bagages en hauteur (1) selon l'une des revendications 1 à 5, **caractérisé en ce que** l'élément de transmission de force (11) comprend une surface de friction (15) permettant de transmettre une force de friction dépendant de l'état de charge de l'élément de compartiment à bagages mobile (3) à une surface de friction (15') correspondante de l'élément de contact (14), de préférence la surface de friction (15, 15') comprenant, sur l'élément de transmission de force (11) et/ou sur l'élément de contact (14), un matériau antidérapant.

13. Compartiment à bagages en hauteur (1) selon la revendication 12, **caractérisé en ce que** la surface de friction (15) est prévu sur la périphérie de l'élément de transmission de force (11) pivotant avec l'élément de compartiment à bagages mobile (3).

14. Compartiment à bagages en hauteur (1) selon l'une des revendications 1 à 13, **caractérisé en ce que** l'élément de transmission de force (11) est logé de façon à ce que l'articulation (4) entre l'élément de compartiment à bagages fixe (2) et l'élément de compartiment à bagages mobile (3), dans l'état de charge, pendant le processus de fermeture, l'élément de transmission de force (11) étant conçu de préférence comme un élément à cames avec une surface de palier non circulaire ou l'élément de transmission de force (11) est relié avec une butée (27) permettant de soulever l'élément de transmission de force (11) avec l'articulation (4) lorsque la position fermée est atteinte.

15. Avion avec un élément de structure sur lequel est monté un compartiment à bagages en hauteur (1), **caractérisé en ce que** le compartiment à bagages en hauteur (1) est conçu selon l'une des revendications 1 à 14.
